# EUROPEAN PATENT SPECIFICATION

(11) **EP 2 234 747 B1**
(45) Date of publication and mention of the grant of the patent: **22.11.2017**
(21) Application number: 09705673.3
(22) Date of filing: 30.01.2009
(51) Int. Cl.: B23D 47/12, B27B 5/065, B27B 5/20, B23D 45/10

(54) **A PANEL SAW MACHINE FOR PANELS MADE OF WOOD OR SIMILAR MATERIAL.**
PLATTENAUFTEILSÄGE ZUR BEARBEITUNG VON PLATTEN AUS HOLZ ODER ÄHNLICHEM
SCIE À PANNEAU POUR PANNEAUX DE BOIS OU DE MATÉRIAU ANALOGUE

(30) Priority: 31.01.2008 IT BO20080066
(43) Date of publication of application: 06.10.2010
(73) Proprietor: Giben International S.P.A., 40065 Pianoro (IT)
(72) Inventor: BENUZZI, Piergiorgio, 40141 Bologna (IT)
(74) Representative: Modiano, Micaela Nadia
(86) International application number: PCT/IB2009/050377
(87) International publication number: WO 2009/095885

(56) References cited:
- EP-A- 0 768 144
- EP-A- 1 074 326
- EP-A- 1 362 656
- IT-A1- BO20 060 673
- US-A- 1 826 222

## Description

### Technical Field

This invention relates to a panel saw machine for panels made of wood or similar materials, as per the preamble of claim 1. Such a panel saw machine is disclosed by EP 1 074 326 A2.

### Background Art

At present, panel saw machines essentially comprise:
- a main frame comprising a first horizontal table;
- means for advancing the panels along a defined feed line and usually consisting of a crossbar mobile in parallel along said first horizontal table and equipped with clamps used for gripping the panel or panels to be sawn;
- a straight cutting unit transversal to the feed line and comprising a beam that mounts one or two hold-down bars for pressing down on the panels, and a carriage, positioned near the beam and equipped with at least one mobile circular blade designed to cut the panels along a line transversal to the beam and usually passing between the hold-down bars;
- a second table, positioned in front of the cutting unit, downstream of the cutting unit relative to the panel feed line on the first horizontal table, for supporting the panels and/or the respective panel lengths obtained by cutting.

Over time, these panel saw machines have been continually improved in all the parts described above in order to increase productivity, enhance panel cutting quality and make machine operation safer.

Thus, if on the one hand targets of high quality have been achieved, on the other, machine purchase and maintenance costs have risen proportionately.

In practice, increased costs have restricted the range of potential machine buyers to companies with high productivity requirements that can quickly amortise the high initial cost of the machines, while individual craftsmen, one-person concerns and medium- to low-productivity companies cannot in most cases afford to buy machines of this kind.

For example, the above mentioned blade unit or carriage, which this specification refers to in particular, usually consists of a mobile unit or carriage that mounts the main blade and, normally, a smaller blade known as "scoring blade". The two blades protrude from a slot made in the first horizontal table.

The carriage is usually driven by a motor which enables it to move along the cutting axis, transversal to the feed line, and mounts at least one other motor to drive the main and scoring blades and the related auxiliary operating elements.

This structure, in its entirety, makes the carriage extremely heavy which means, in turn, that it requires a suitably sized mounting base made from metal fabrications with high-strength guides and a plurality of machined features to allow the passage of cables and conduits for power and air supply lines (to release the blade and extract sawdust) along the whole cutting front.

As a result, this structure is extremely expensive, takes a very long time to assemble and, especially for the electrical and air systems, requires frequent maintenance which must be carried out by specialised personnel and which increases the overall cost of running the machine.

### Disclosure of the Invention

The aim of this invention is therefore to overcome the above mentioned disadvantages by providing a panel saw machine for panels made of wood or similar materials having an extremely compact, lightweight, reliable and inexpensive blade unit with a mounting and drive structure that is simple and practical so as to reduce the assembly and maintenance costs of the blade unit.

According to the invention, this aim is achieved by a panel saw machine for panels made of wood or similar materials, comprising the combination of features of independent claim 1. Preferred embodiments are disclosed in the dependent claims.

### Brief Description of the Drawings

The technical characteristics of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a schematic top plan view of a panel saw machine according to the invention, for panels made of wood or similar materials;
- Figure 2 illustrates the panel saw machine of Figure 1 in a schematic front view from P, with some parts cut away in order to better illustrate others;
- Figure 3 is a front view with some parts cut away to better illustrate others, of a detail P1 from Figure 2;
- Figure 4 is a top plan view, with some parts cut away and others in cross section, of the detail of Figure 3;
- Figure 5 is a side view from P3 of the detail of Figure 3, with some parts cut away and others in cross section;
- Figure 6 is a side view from P4 of the detail of Figure 3, with some parts cut away and others in cross section;

### Detailed Description of the Preferred Embodiments of the Invention

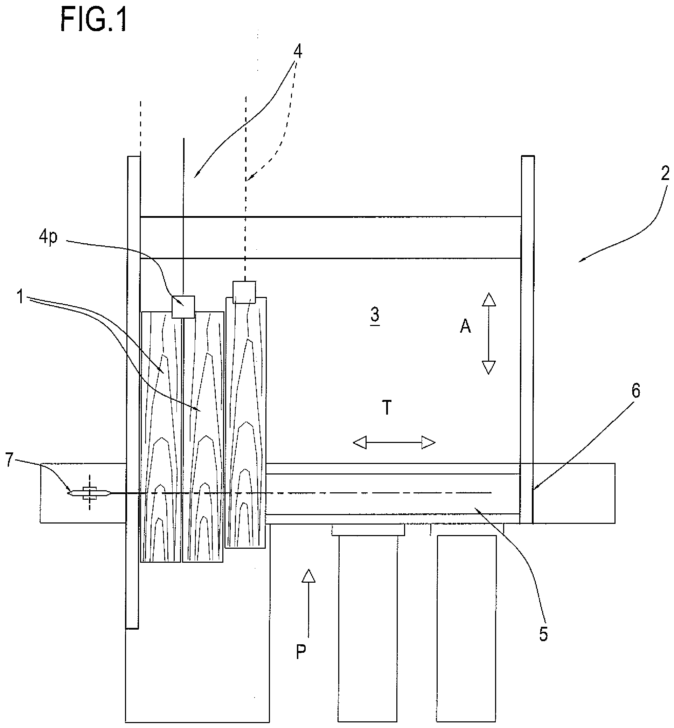

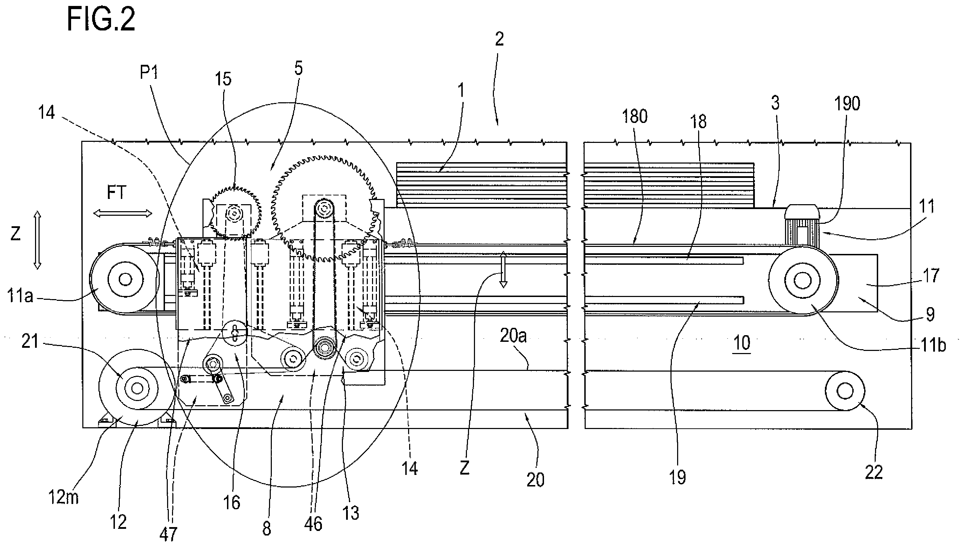

With reference to the accompanying drawings, in particular Figures 1 and 2, the panel saw machine according to the invention is used for cutting panels 1 made of wood or similar materials.

This panel saw machine, labelled 2 in its entirety, essentially comprises:
- a horizontal table 3 for supporting the panels 1;
- means 4 for advancing the panels 1 along a feed line A and mobile in a direction parallel to and along the horizontal table 3 (illustrated schematically with gripper clamps 4p, being of customary type and not strictly relevant to this invention);
- a straight cutting unit 5 transversal to the feed line A and comprising at least one base 10, presser means 6 for holding down the panels 1, and a first saw blade 7 positioned close to the presser means 6, mobile in both directions and protruding lengthways from a slot 3a made in the horizontal table 3 in such a way as to cut the panels 1 along a line T transversal to the feed line A.

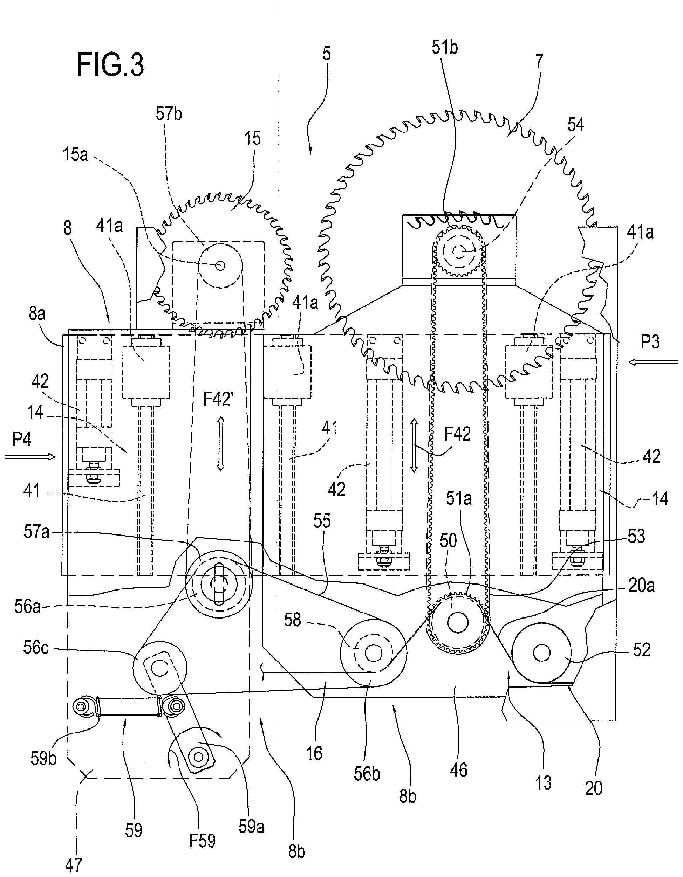

As illustrated in Figures 2 and 3, the cutting unit 5 also comprises:
- a carriage 8 which rotatably mounts the first blade 7 and which is slidably connected to horizontal guide means 9 associated with the mounting base defined by a vertical wall 10;
- adjustment means 14 acting on the carriage 8 and designed to enable the carriage 8 to move vertically in both directions along a line Z perpendicular to the transversal line T (see arrows FT in Figure 2).

Besides the above, the cutting unit 5 comprises first means 11 for moving the carriage 8, allowing the carriage 8 to move in both directions along a transversal line T, and second means 12 for driving the first blade 7, these second means being located under the horizontal work table 3, associated with the mounting wall 10, and connected kinematically through first motion transmission means 13 to the first blade 7 in such a way as to allow the first blade 7 to rotate continuously, irrespective of the position of the latter along the transversal cutting line T.

Again with reference to Figures 2 and 3, the carriage 8 may have rotatably mounted on it a second blade 15, or scoring blade, positioned alongside the first, main blade 7, and connected to the second drive means 12 through second drive transmission means 16 in turn connected to the above mentioned first drive transmission means 13 and mounted on the carriage 8.

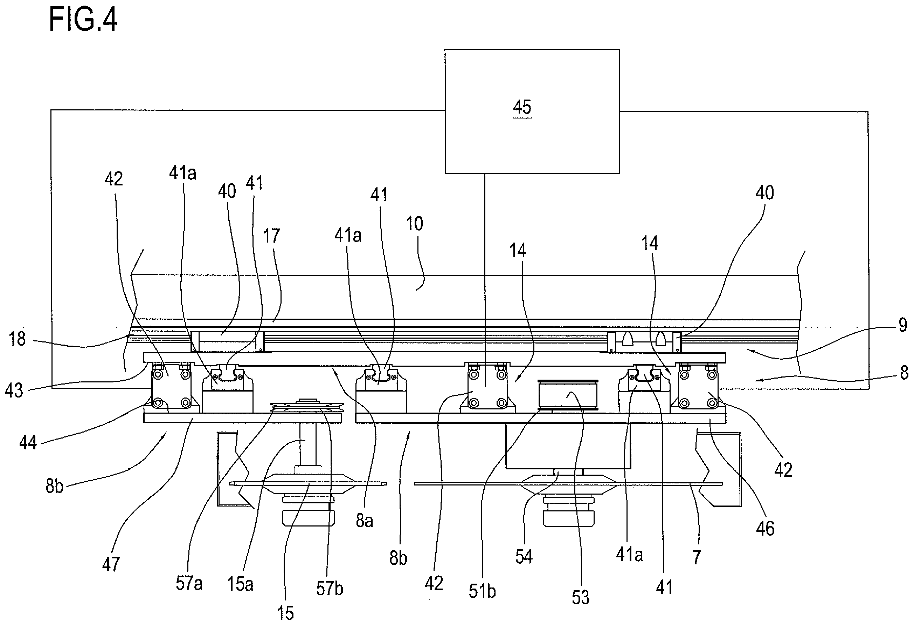

Looking more closely at the technical details (see Figures 2 and 4) the aforementioned guide means 9 comprise a horizontal plate 17 provided with a pair of horizontal guides 18 and 19 to which the carriage 8 is slidably constrained.

The first drive means 11 comprise a pair of first pulleys 11a and 11b, mounted at the respective ends of the cutting unit 5 and rotatably constrained to the horizontal plate 17.

Trained around the pair of first pulleys 11a and 11b there is a first endless belt 180 for driving the carriage 8 and associated, at its free ends, with the carriage 8 itself.

Further, the pulley labelled 11b is connected to a respective first drive unit 190 (for example, a customary geared motor) for driving the pulleys 11a and 11b and, hence, the carriage 8 by pushing and/or pulling.

The aforementioned second means 12 for driving the two blades 7 and 15 comprise a second drive unit 12m mounted close to the mounting wall 10 (positioned on a tread surface under the table 3) and used to drive a second endless belt or cable 20 (preferably of steel) trained around at least one second pair of pulleys 21 and 22 rotatably associated with the ends of the wall 10 in such a way that the sections of the second belt 20 are positioned at least along the full extent of the cutting unit 5.

It should be underlined that the belts or cables described in this text and illustrated in the accompanying drawings may be of any kind, that is to say, toothed belts, flat belts, Vee belts or cables made of any material, without thereby restricting the scope of the inventive concept.

The upper section 20a of the second belt 20 is engaged with the first drive transmission means 13 positioned on the carriage 8 (as will become clearer as this description continues) in order to drive the first blade 7 independently of the movement and position of the carriage 8 along the cutting unit 5.

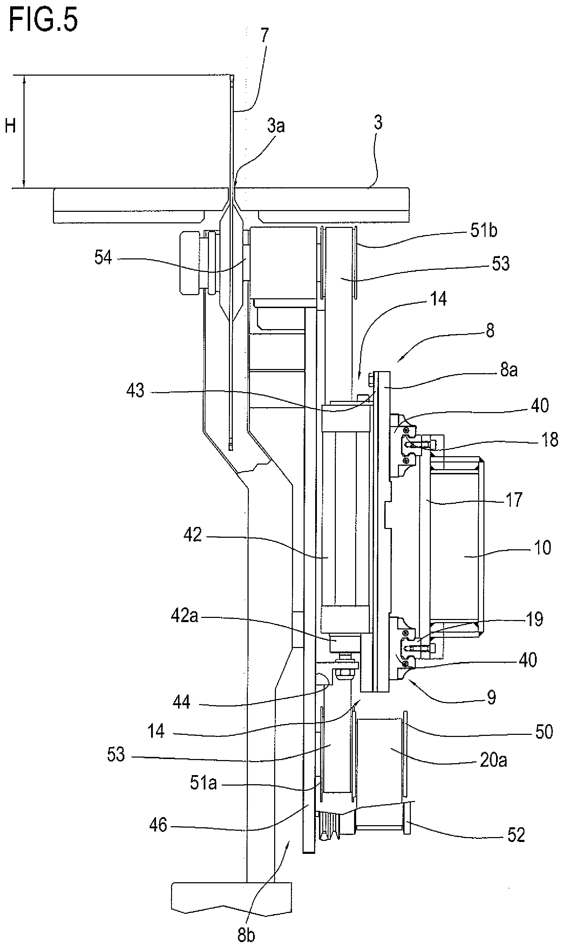

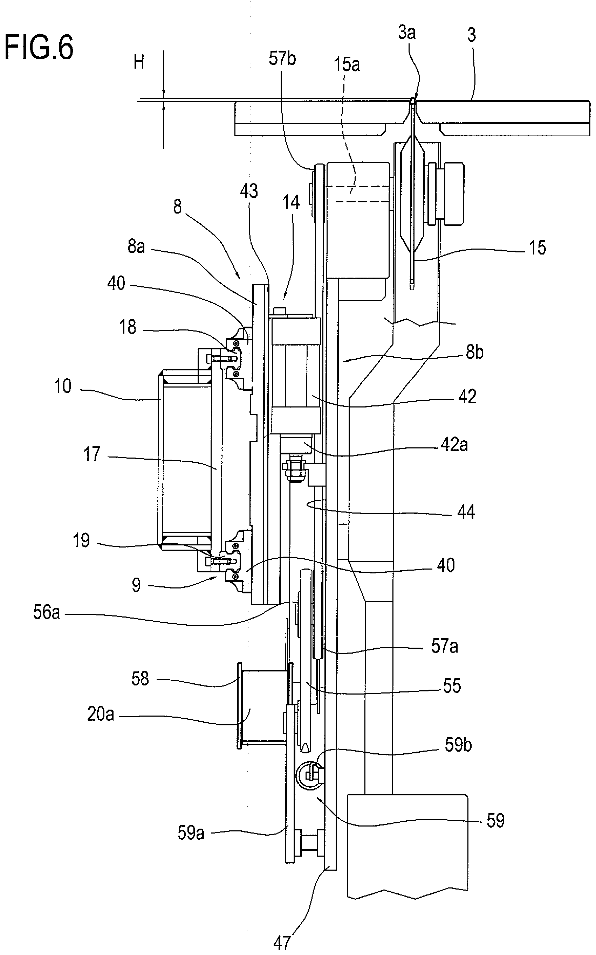

Returning now to the adjustment means 14 (see Figures 2 to 6), these are interposed between the horizontal guide means 9 and the carriage 8 so as to enable the carriage 8 to be lifted and lowered relative to the slot 3a: in this way, it is possible to vary the extent to which the first and second blades 7 and 15 protrude from the slot 3a, that is to say, to adjust the working part H of the scoring and cutting blades 7 and 15 that protrudes from the slot 3a.

Looking in more detail at the operating structure, the above mentioned first guides 18 and 19 have slidably mounted on them a first portion 8a of the carriage 8, equipped with respective counter-guides 40, and with a pair of second, vertical guides 41 slidably associated with a second portion 8b, mobile along the path Z, of the carriage 8.

The adjustment means 14 are interposed between the first and second portions 8a and 8b making up the carriage 8.

These adjustment means 14 may comprises at least one cylinder 42 fixed, at its lower end, to a front wall 43 of the first portion 8a and, at its rod 42a, to a rear wall 44 of the mobile portion 8b.

In the structure of the carriage 8 according to the invention as illustrated in Figures 2 to 6, the second, mobile portion 8b is divided into two half-parts 46 and 47, of which the one labelled 46 rotatably mounts the first blade 7 and the one labelled 47 rotatably mounts the second blade 15, or scoring blade.

Both the half-parts 46 and 47 are equipped with respective vertical counter-guides 41a and with the aforementioned adjustment means 14, which are interposed between the two half-parts 46 and 47 and the first portion 8a making up the carriage 8.

In other terms, the mobile portion 8b is structured as follows:
- the first, mobile half-part 46 is equipped with two cylinders 42, forming part of the adjustment means 14, each fixed, at its lower end, to the front wall 43 of the first portion 8a and, at its rod 42a, to the rear wall 44 of the first, mobile half-part 46; said first, mobile half part 46 having associated with it a respective pair of vertical counter-guides 41a;
- the second half-part 47 is equipped with a single cylinder 42 (smaller than the other two cylinders), forming the other part of the adjustment means 14 and fixed, at its lower end, to the respective front wall 43 of the first portion 8a and, at its rod 42a, to the rear wall 44 of the second half-part 47; said second half part 47 having associated with it a respective single vertical counter-guide 41a.

The two cylinders 42 of the first, mobile half-part 46 and the cylinder 42 of the second, mobile half-part 47 are controlled by the aforementioned machine control unit 45 (illustrated as a block in Figure 4) which is designed to enable and disable the cylinders 42 in such a way that they can move in both directions (see arrows F42 and F42' in Figure 3), synchronously or independently between the first half-part 46 and the second, mobile half-part 47.

In other terms, the two half-parts 46 and 47 can slide along Z synchronously or independently according to the working requirements of the panel saw machine.

Returning now to the aforementioned transmission means, the first transmission means 13 are mounted on the first half-part 46 of the mobile portion 8b of the carriage 8, while the second transmission means 16 are mounted on both the first half-part 46 and on the second half-part 47 of the mobile portion 8b of the carriage 8.

More specifically, the first transmission means 13 (see Figures 3, 5 and 6 in particular) comprise at least one third pulley 50 which is rotatably associated with the first half-part 46 and which is engaged by the upper section 20a of the second belt 20 forming part of the second drive means 12.

The third pulley 50 is coaxially keyed to one of a pair of fourth pulleys 51a, 51b having a third, endless belt 53 trained around them. The other fourth pulley 51b is coaxially keyed to a shaft 54 that mounts the first blade 7 and rotationally drives the latter by transmitting the motion derived from the third pulley 50.

There is also another transmission pulley 52 for tensioning the section 20a of the drive belt 20.

The above mentioned second transmission means 16 comprise a fourth endless belt 55 trained around three fifth pulleys 56a, 56b, 56c, the one labelled 56a of which is coaxially keyed to a pulley 57a forming part of a pair of sixth pulleys 57a, 57b.

The other sixth pulley 57b is coaxially keyed to the shaft 15a of the second, scoring blade 15.

One of the fifth pulleys, namely the one labelled 56b, is keyed to the first half-part 46 of the mobile portion 8b of the carriage 8 in a position such that it engages, by means of a seventh pulley 58 coaxial with and keyed to the fifth pulley 56b itself, the upper section 20a of the second belt 20 and in such a way as to also rotate the second, scoring blade 15.

As mentioned previously, the two half-parts 46 and 47 can move independently of each other and thus, the second half-part 47 is equipped with a tensioning element 59 designed to adjust the second transmission means 16 relative to the first transmission means 13 according to the position of the two half-parts 46, 47 in height.

More in detail, the tensioning element 59 comprises an arm 59a pivoted at one end of it to the second half-part 47 and fixed at its other end to the fifth pulley 56c.

The arm 59a is retained by a tensioning spring 59b connected at one end to the arm 59a and at the other end to the second half-part 47: in this way, the arm 59b can swing in both directions (see arrow F59) according to the position of the fifth pulley 56b mounted on the first half-part 46, thereby adjusting the position of the fifth pulley 56c and keeping the fourth belt 55 tensioned.

A panel saw machine made as described above thus achieves the above mentioned aims thanks to a structure for driving and adjusting the blade carriage made extremely simple and light.

This is made possible by the fact that the mobile parts of the blade unit consist of a simple carriage with the two blades on it and a plurality of belts and pulleys mounted on a plate equipped with slide guides and on which there is only the system for driving the carriage drive pulleys.

The rotational drive of the blades, on the other hand, is indirect, independent of the carriage and accomplished by a belt and by the blade transmission elements: that means the moving parts are lighter in weight and there is no need for electrical and air connections that move along with the carriage, with obvious advantages in terms of machine reliability and safety.

Furthermore, the blades can be adjusted in height independently of each other thanks to a simple system of guides and cylinders mounted directly on the parts of the carriage.

This type of architecture, therefore, optimizes the cutting area, making it economical in terms of construction and reducing the number of moving cables and conduits and thus also reducing machine maintenance requirements and down time; moreover, this is achieved without reducing its adjustment capabilities and cutting performance, which are comparable to those of machines having more complex structures.

The invention described above is susceptible of industrial application and may be modified and adapted in several ways without thereby departing from the scope of the appended claims. Moreover, all the details of the invention may be substituted by technically equivalent elements.

## Claims

1. A panel saw machine for panels (1) made of wood or similar materials, the panel saw machine (2) comprising at least:
- a horizontal table (3) for supporting the panels (1);
- means (4) for advancing the panels (1) along a feed line (A), said means (4) being mobile in a direction parallel to and along the horizontal table (3);
- a straight cutting unit (5) transversal to the feed line (A) and comprising at least one base (10), presser means (6) for holding down the panels (1), and a first saw blade (7) positioned close to the presser means (6), mobile in both directions and protruding lengthways from a slot (3a) made in the horizontal work table (3) in such a such a way as to cut the panels (1) along a line (T) transversal to the feed line (A), the panel saw machine comprising:
- a carriage (8) which rotatably mounts the first blade (7) and which is slidably connected to horizontal guide means (9) along the line (T) and associated with the base (10); the guide means (9) comprising a horizontal plate (17) provided with a pair of first, fixed horizontal guides (18, 19) to which the carriage (8) is slidably constrained, the first guides (18, 19) having slidably mounted on them a first portion (8a) of the carriage (8), equipped with respective counter-guides (40) and with a pair of second, vertical guides (41) slidably associated with a second, mobile portion (8b) of the carriage (8), the panel saw machine comprising adjustment means (14) interposed between the first and second portions (8a, 8b) making up the carriage (8), said adjustment means (14) acting on the second mobile portion (8b) of the carriage (8) and being designed to enable said second mobile portion (8b) to move vertically in both directions along a line (Z) perpendicular to the transversal line (T), the adjustment means (14) being designed to enable the second mobile (8b) portion to be lifted and lowered relative to the slot (3a) in such a way as to vary the extent to which the first blade (7) protrudes from the slot (3a), that is to say, to adjust the working part (H) of the cutting blade (7) that protrudes from the slot (3a), **characterized in that** the panel saw machine comprises
- second means (12) for indirectly driving the first blade (7), mounted on the base (10) and kinematically connected, through first drive transmission means (13), to the first blade (7) in such a way as to enable the latter to rotate, whereby the second means (12) comprise a second drive unit (12m) mounted close to the base (10), positioned on a tread surface under the horizontal table (3) and used to drive a second endless belt (20) trained around at least one second pair of pulleys (21, 22) rotatably associated with the ends of the base (10) in such a way that the sections of the second belt (20) are positioned at least along the full extent of the cutting unit (5).

2. The machine according to claim 1, **characterized in that** it further comprises first means (11) for moving the carriage (8), allowing the carriage (8) to move in both directions along the transversal line (T).

3. The machine according to claims 1 or 2, **characterized in that** the carriage (8) has rotatably mounted on it a second blade (15), or scoring blade, positioned alongside the first, main blade (7), and connected to the second drive means (12) through second drive transmission means (16) in turn connected to the first drive transmission means (13) and mounted on the carriage (8).

4. The machine according to claim 1, **characterized in that** the adjustment means (14) comprise at least one cylinder (42) fixed, at its lower end, to a front wall (43) of the first, fixed portion (8a) and, at its rod (42a), to a rear wall (44) of the mobile portion (8b).

5. The machine according to claim 4, **characterized in that** the at least one cylinder (42) is controlled by a machine control unit (45) designed to enable and disable the cylinder (42) in such a way that it can move in both directions on the mobile portion (8b) of the carriage.

6. The machine according to claim 1, **characterized in that** the second, mobile portion (8b) is divided into two half-parts (46, 47), one of which (46) rotatably mounts the first blade (7) and the other rotatably mounts a second blade (15), or scoring blade; both the half-parts (46, 47) being equipped with respective vertical counter-guides (41a) and with the adjustment means (14), which are interposed between the two half-parts (46, 47) and the first portion (8a) making up the carriage (8).

7. The machine according to claim 6, **characterized in that** the first, mobile half-part (46) is equipped with two cylinders (42), forming part of the adjustment means (14), each fixed, at its lower end, to a front wall (43) of the first portion (8a) and, at its rod (42a), to a rear wall (44) of the first, mobile half-part (46); said first, mobile half part (46) having associated with it a respective pair of vertical counter-guides (41a).

8. The machine according to claim 6, **characterized in that** the second half-part (47) of the mobile portion (8b) is equipped with a cylinder (42), forming part of the adjustment means (14) fixed, at its lower end, to a front wall (43) of the first, fixed portion (8a) and, at its rod (42a), to a rear wall (44) of the second, mobile half-part (47); the second, mobile half-part (47) being associated with a respective vertical counter-guide (41a).

9. The machine according to claims 6 to 8, **characterized in that** the two cylinders (42) of the first mobile half-part (46) and the cylinder (42) of the second mobile half-part (47) are controlled by a machine control unit (45) which is designed to enable and disable the cylinders (42) in such a way that they can move in both directions synchronously or independently between the first half-part (46) and the second, mobile half-part (47).

10. The machine according to claim 1, **characterized in that** the first transmission means (13) comprise at least one third pulley (50) which is rotatably associated with the carriage (8) and engaged by the upper section (20a) of **the** second belt (20) forming part of the second drive means (12); the third pulley (50) being coaxially keyed to one of a fourth pair of pulleys (51a, 51b) with a third endless belt (53) trained around them; the other fourth pulley (51b) being coaxially keyed to a shaft (54) that mounts the first blade (7) and rotationally drives the latter by transmitting the motion derived from the third pulley (50).

11. The machine according to claim 3, **characterized in that** the second transmission means (16) comprise a fourth endless belt (55) trained around three fifth pulleys (56a, 56b, 56c), one of which (56a) is coaxially keyed to a pulley (57a) forming part of a pair of sixth pulleys (57a, 57b), the other sixth pulley (57b) being coaxially keyed to the shaft of the second, scoring blade (15); one (56b) of the fifth pulleys (56a, 56b, 56c) being keyed to the carriage (8) in a position such that it engages, by means of a seventh pulley (58) coaxial with and keyed to the fifth pulley (56b), an upper section (20a) of **the** second belt (20) forming part of the second drive means (12) in such a way as to also rotate the second, scoring blade (15).

12. The machine according to claims 3 and 6, **characterized in that** the first transmission means (13) are mounted on the first half-part (46) of the mobile portion (8b) of the carriage (8), and the second transmission means (16) are mounted on both the first half-part (46) and on the second half-part (47) of the mobile portion (8b) of the carriage (8).

13. The machine according to claim 12, **characterized in that** second half-part (47) is equipped with a tensioning element (59) designed to adjust the second transmission means (16) relative to the first transmission means (13) according to the position of the two half-parts (46, 47) in height.

## Patentansprüche

1. Eine Plattenaufteilsäge für Platten (1) aus Holz oder ähnlichen Materialien, wobei die Plattenaufteilsäge (2) mindestens Folgendes umfasst:
- einen horizontalen Tisch (3) zum Tragen der Platten (1);
- Mittel (4) zum Vorwärtsbewegen der Platten (1) entlang einer Vorschublinie (A), wobei die Mittel (4) in einer Richtung parallel zu und entlang dem horizontalen Tisch (3) beweglich sind;
- eine Geradeschnitteinheit (5) quer zu der Vorschublinie (A), und die Folgendes umfasst: mindestens eine Basis (10), Pressmittel (6) zum Herunterdrücken der Platten (1) und ein erstes Sägeblatt (7), nahe an den Pressmitteln (6) positioniert, beweglich in beide Richtungen und in Längsrichtung aus einem Schlitz (3a) in dem horizontalen Werktisch (3) herausragend, um so die Platten (1) entlang einer Linie (T) quer zu der Vorschublinie (A) zu schneiden, wobei die Plattenaufteilsäge Folgendes umfasst:
- einen Schlitten (8), der das erste Sägeblatt (7) drehbar trägt und entlang der Linie (T) verschiebbar mit horizontalen Führungsmitteln (9) verbunden und mit der Basis (10) verbunden ist; wobei die Führungsmittel (9) eine horizontale Platte (17) umfassen, ausgestattet mit einem Paar erster, fester horizontaler Führungen (18, 19), an denen der Schlitten (8) verschiebbar eingespannt ist, wobei an den ersten Führungen (18, 19) ein erster Abschnitt (8a) des Schlittens (8) verschiebbar montiert ist, ausgestattet mit entsprechenden Gegenführungen (40) und mit einem Paar zweiter, vertikaler Führungen (41), die verschiebbar mit einem zweiten beweglichen Abschnitt (8b) des Schlittens (8) verbunden sind, wobei die Plattenaufteilsäge Einstellmittel (14) umfasst, welche zwischen dem ersten und dem zweiten Abschnitt (8a, 8b) angeordnet sind, die den Schlitten (8) bilden, wobei die Einstellmittel (14) auf den zweiten beweglichen Abschnitt (8b) des Schlittens (8) einwirken und konstruiert sind, um es dem zweiten beweglichen Abschnitt (8b) zu ermöglichen, sich entlang einer Linie (Z) senkrecht zu der Querlinie (T) vertikal in beide Richtungen zu bewegen, wobei die Einstellmittel (14) konstruiert sind, um es dem zweiten beweglichen Abschnitt (8b) zu ermöglichen, im Verhältnis zum Schlitz (3a) auf solche Art angehoben und abgesenkt zu werden, dass der Grad, in dem das erste Sägeblatt (7) aus dem Schlitz (3a) herausragt, angepasst wird; das heißt, so dass der arbeitende Teil (H) des Sägeblatts (7), der aus dem Schlitz (3a) herausragt, angepasst wird,
**dadurch gekennzeichnet, dass** die Plattenaufteilsäge Folgendes umfasst:
- zweite Mittel (12) zum indirekten Antreiben des ersten Sägeblatts (7), montiert an der Basis (10) und kinematisch über erste Antriebsübertragungsmittel (13) so mit dem ersten Sägeblatt (7) verbunden, dass es diesem ermöglicht wird, sich zu drehen,
wobei die zweiten Mittel (12) eine zweite Antriebseinheit (12m) umfassen, nahe an der Basis (10) montiert, die auf einer Lauffläche unter dem horizontalen Tisch (3) positioniert ist und verwendet wird, um einen zweiten Endlosriemen (20) anzutreiben, der um mindestens ein zweites Paar von Riemenscheiben (21, 22) gespannt ist, die auf solche Art drehbar mit den Enden der Basis (10) verbunden sind, dass die Abschnitte des zweiten Riemens (20) mindestens entlang der gesamten Ausdehnung der Geradschnitteinheit (5) positioniert sind.

2. Die Plattenaufteilsäge gemäß Anspruch 1, **dadurch gekennzeichnet, dass** sie weiter erste Mittel (11) zum Bewegen des Schlittens (8) umfasst, die es dem Schlitten (8) ermöglichen, sich entlang der Querlinie (T) in beide Richtungen zu bewegen.

3. Die Plattenaufteilsäge gemäß Anspruch 1 oder 2, **dadurch gekennzeichnet, dass** an dem Schlitten (8) drehbar ein zweites Sägeblatt (15), oder Ritzblatt, montiert ist, positioniert entlang dem ersten Blatt (Hauptblatt) (7) und verbunden mit den zweiten Antriebsmitteln (12) über zweite Antriebsübertragungsmittel (16), die wiederum mit den ersten Antriebsübertragungsmitteln (13) verbunden und an dem Schlitten (8) montiert sind.

4. Die Plattenaufteilsäge gemäß Anspruch 1, **dadurch gekennzeichnet, dass** die Einstellmittel (14) mindestens einen Zylinder (42) umfassen, der mit seinem unteren Ende an einer Vorderwand (43) des ersten, festen Abschnitts (8a) und mit seiner Stange (42a) an einer Rückwand (44) des beweglichen Abschnitts (8b) befestigt ist.

5. Die Plattenaufteilsäge gemäß Anspruch 4, **dadurch gekennzeichnet, dass** der mindestens eine Zylinder (42) von einer Maschinensteuereinheit (45) gesteuert wird, die dazu dient, den Zylinder so zu aktivieren und zu deaktivieren, dass er sich an dem beweglichen Abschnitt (8b) des Schlittens in beide Richtungen bewegen kann.

6. Die Plattenaufteilsäge gemäß Anspruch 1, **dadurch gekennzeichnet, dass** der zweite bewegliche Abschnitt (8b) in zwei Hälften (46, 47) unterteilt ist, von denen eine (46) das erste Blatt (7) drehbar trägt und das andere ein zweites Blatt (15), oder Ritzblatt, drehbar trägt; wobei beide Hälften (46, 47) mit entsprechenden vertikalen Gegenführungen (41a) und mit den Einstellmitteln (14) ausgestattet sind, die zwischen den beiden Hälften (46, 47) angeordnet sind, und wobei der erste Abschnitt (8a) den Schlitten (8) bildet.

7. Die Plattenaufteilsäge gemäß Anspruch 6, **dadurch gekennzeichnet, dass** die erste bewegliche Hälfte (46) mit zwei Zylindern (42) ausgestattet ist, die einen Teil der Einstellmittel (14) bilden, wobei jeder mit seinem unteren Ende an einer Vorderwand (43) des ersten Abschnitts (8a) und mit seiner Stange (42a) an einer Rückwand (44) der ersten beweglichen Hälfte (46) befestigt ist; wobei mit der ersten beweglichen Hälfte (46) ein entsprechendes Paar vertikaler Gegenführungen (41a) verbunden ist.

8. Die Plattenaufteilsäge gemäß Anspruch 6, **dadurch gekennzeichnet, dass** die zweite Hälfte (47) des beweglichen Abschnitts (8b) mit einem Zylinder (42) ausgestattet ist, der einen Teil der Einstellmittel (14) bildet, mit seinem unteren Ende an einer Vorderwand (43) des ersten, festen Abschnitts (8a) und mit seiner Stange (42a) an einer Rückwand (44) der zweiten beweglichen Hälfte (47) befestigt ist; wobei die zweite bewegliche Hälfte (47) mit einer entsprechenden vertikalen Gegenführung (41a) verbunden ist.

9. Die Plattenaufteilsäge gemäß den Ansprüchen 6 bis 8, **dadurch gekennzeichnet, dass** die beiden Zylinder (42) der ersten beweglichen Hälfte (46) und der Zylinder (42) der zweiten beweglichen Hälfte (47) von einer Maschinensteuereinheit (45) gesteuert werden, die dazu dient, die Zylinder (42) so zu aktivieren und zu deaktivieren, dass sie sich in beide Richtungen synchron oder unabhängig zwischen der ersten Hälfte (46) und der zweiten beweglichen Hälfte (47) bewegen können.

10. Die Plattenaufteilsäge gemäß Anspruch 1, **dadurch gekennzeichnet, dass** die ersten Übertragungsmittel (13) mindestens eine dritte Riemenscheibe (50) umfassen, die drehbar mit dem Schlitten (8) verbunden ist und mit dem oberen Abschnitt (20a) des zweiten Riemens (20) in Eingriff steht, der einen Teil der zweiten Antriebsmittel (12) bildet; wobei die dritte Riemenscheibe (50) koaxial mit einem von einem vierten Paar von Riemenscheiben (51a, 51b) verkeilt ist, wobei ein dritter Endlosriemen (53) um sie gespannt ist; wobei die andere vierte Riemenscheibe (51b) koaxial mit einer Welle (54) verkeilt ist, die das erste Blatt (7) trägt und es durch Übertragung der Bewegung, die von der dritten Riemenscheibe (50) abgeleitet wird, drehend antreibt.

11. Die Plattenaufteilsäge gemäß Anspruch 3, **dadurch gekennzeichnet, dass** die zweiten Übertragungsmittel (16) einen vierten Endlosriemen (55) umfassen, der um drei fünfte Riemenscheiben (56a, 56b, 56c) gespannt ist, von denen eine (56a) koaxial mit einer Riemenscheibe (57a) verkeilt ist, die einen Teil eines Paares sechster Riemenscheiben (57a, 57b) bildet, wobei die andere sechste Riemenscheibe (57b) koaxial mit der Welle des zweiten Blatts (Ritzblatts) (15) verkeilt ist; wobei eine (56b) der fünften Riemenscheiben (56a, 56b, 56c) mit dem Schlitten (8) in einer solchen Position verkeilt ist, dass sie über eine siebte Riemenscheibe (58), die koaxial mit und mit der fünften Riemenscheibe (56b) verkeilt ist, in einen oberen Abschnitt (20a) des zweiten Riemens (20) eingreift, der einen Teil der zweiten Antriebsmittel (12) bildet, um so auch das zweite Blatt (Ritzblatt) (15) zu drehen.

12. Die Plattenaufteilsäge gemäß den Ansprüchen 3 und 6, **dadurch gekennzeichnet, dass** die ersten Übertragungsmittel (13) auf der ersten Hälfte (46) des beweglichen Abschnitts (8b) des Schlittens (8) montiert sind und die zweiten Übertragungsmittel (16) sowohl auf der ersten Hälfte (46) als auch auf der zweiten Hälfte (47) des beweglichen Abschnitts (8b) des Schlittens (8) montiert sind.

13. Die Plattenaufteilsäge gemäß Anspruch 12, **dadurch gekennzeichnet, dass** die zweite Hälfte (47) mit einem Spannelement (59) ausgestattet ist, das dazu dient, die zweiten Übertragungsmittel (16) relativ zu den ersten Übertragungsmitteln (13) entsprechend der Position der beiden Hälften (46, 47) in der Höhe anzupassen.

## Revendications

1. Scie à panneaux pour panneaux (1) en bois ou en matériaux similaires, la scie (2) à panneaux comportant au moins :
- une table horizontale (3) pour supporter les panneaux (1) ;
- des moyens (4) pour faire avancer les panneaux (1) suivant un axe de progression (A), lesdits moyens (4) étant mobiles parallèlement à la table horizontale (3) et le long de cette dernière ;
- un dispositif de coupe rectiligne (5) transversal à l'axe de progression (A) et comprenant au moins une embase (10), un moyen presseur (6) pour immobiliser les panneaux (1), et une première lame (7) de scie, placée près du moyen presseur (6), mobile dans les deux sens et faisant saillie longitudinalement depuis une fente (3a) ménagée dans la table de travail horizontale (3) de façon à couper les panneaux (1) suivant un axe (T) transversal à l'axe de progression (A), la scie à panneaux comportant :
- un chariot (8) qui supporte de manière rotative la première lame (7) et qui coulisse sur un moyen de guidage horizontal (9) suivant l'axe (T) et est associé à l'embase (10), le moyen de guidage (9) comprenant un plateau horizontal (17) muni d'une paire de premiers guides fixes horizontaux (18, 19) auxquels le chariot (8) est retenu de manière coulissante, sur les premiers guides (18, 19) étant montée une première partie (8a) du chariot (8), équipée de contre-guides respectifs (40) et d'une paire de seconds guides verticaux (41) associés de manière coulissante à une seconde partie mobile (8b) du chariot (8), la scie à panneaux comportant des moyens de réglage (14) intercalés entre les première et seconde parties (8a, 8b) composant le chariot (8), lesdits moyens de réglage (14) agissant sur la seconde partie mobile (8b) du chariot (8) et étant conçue pour permettre à ladite seconde partie mobile (8b) de se mouvoir verticalement dans les deux sens suivant un axe (Z) perpendiculaire à l'axe transversal (T), les moyens de réglage (14) étant conçus pour permettre à la seconde partie mobile (8b) d'être soulevée et abaissée par rapport à la fente (3a) de manière à modifier l'ampleur du dépassement de la première lame (7) depuis la fente (3a), c'est-à-dire pour régler la partie utile (H) de la lame de coupe (7) qui dépasse de la fente (3a),
la scie à panneaux étant **caractérisée en ce qu'**elle comporte
- un second moyen (12) pour entraîner indirectement la première lame (7), monté sur l'embase (10) et relié cinématiquement, par l'intermédiaire d'un premier moyen de transmission (13), à la première lame (7) afin de permettre à cette dernière de tourner, le second moyen (12) comprenant un second dispositif d'entraînement (12m) monté près de l'embase (10), placé sur une surface d'appui sous la table horizontale (3) et servant à entraîner une deuxième courroie sans fin (20) autour d'au moins une seconde paire de poulies (21, 22) associées de manière rotative aux extrémités de l'embase (10) afin que les brins de la deuxième courroie (20) soient placés au moins sur toute la longueur du dispositif de coupe (5).

2. Scie selon la revendication 1, **caractérisée en ce qu'**elle comporte en outre un premier moyen (11) pour déplacer le chariot (8), permettant au chariot (8) de se mouvoir dans les deux sens sur l'axe transversal (T)..

3. Scie selon la revendication 1 ou 2, **caractérisée en ce que**, sur le chariot (8), est montée de manière à pouvoir tourner une seconde lame (15), ou lame inciseuse, placée le long de la première lame, principale (7), et reliée au second moyen d'entraînement (12) par un second moyen de transmission (16) lui-même relié au premier moyen de transmission de d'entraînement (13) et monté sur le chariot (8).

4. Scie selon la revendication 1, **caractérisée en ce que** le moyen de réglage (14) comprend au moins un vérin (42) fixé, en son extrémité inférieure, à une paroi avant (43) de la première partie, fixe (8a) et, au niveau de sa tige (42a), à une paroi arrière (44) de la partie mobile (8b).

5. Scie selon la revendication 4, **caractérisée en ce que** le/les vérin(s) (42) est sont commandé(s) par un dispositif de commande (45) de scie conçu pour activer et désactiver le vérin (42) de telle sorte qu'il puisse bouger dans les deux sens sur la partie mobile (8b) du chariot.

6. Scie selon la revendication 1, **caractérisée en ce que** la seconde partie, mobile (8b), est divisée en deux moitiés (46, 47), dont l'une (46) supporte de manière rotative la première lame (7) et l'autre supporte de manière rotative une seconde lame (15), ou lame inciseuse, les deux moitiés (46, 47) étant munies de contre-guides verticaux respectifs (41a) et des moyens de réglage (14), intercalés entre les deux moitiés (46, 47) et la première partie (8a) composant le chariot (8).

7. Scie selon la revendication 6, **caractérisée en ce que** la première moitié, mobile (46) est équipée de deux vérins (42), faisant partie des moyens de réglage (14), fixés chacun, en son extrémité inférieure, à une paroi avant (43) de la première partie (8a) et, au niveau de sa tige (42a), à une paroi arrière (44) de la première moitié mobile (46), une paire respective de contre-guides verticaux (41a) étant associée à ladite première moitié mobile (46).

8. Scie selon la revendication 6, **caractérisée en ce que** la seconde moitié (47) de la partie mobile (8b) est équipée d'un vérin (42), faisant partie des moyens de réglage (14), fixé, en son extrémité inférieure, à une paroi avant (43) de la première partie fixe (8a) et, au niveau de sa tige (42a), à une paroi arrière (44) de la seconde moitié mobile (47), un contre-guide vertical respectif (41a) étant associé à la seconde moitié mobile (47).

9. Scie selon les revendications 6 à 8, **caractérisée en ce que** les deux vérins (42) de la première moitié mobile (46) et le vérin (42) de la seconde moitié mobile (47) sont commandés par un dispositif de commande (45) de scie conçu pour activer et désactiver les vérins (42) afin qui puissent se mouvoir d'une manière synchrone et indépendante entre la première moitié (46) et la seconde moitié, mobile (47).

10. Scie selon la revendication 1, **caractérisée en ce que** le premier moyen de transmission (13) comprend au moins une troisième poulie (50) associée d'une manière rotative au chariot (8) et sur laquelle est engagé le brin supérieur (20a) de la deuxième courroie (20) faisant partie du second moyen d'entraînement (12), la troisième poulie (50) étant clavetée d'une manière coaxiale sur une première poulie appartenant à une quatrième paire de poulies (51a, 51 b), une troisième courroie sans fin (53) étant entraînée autour de celles-ci, l'autre poulie (51b) de la quatrième paire de poulies étant clavetée coaxialement sur un arbre (54) qui supporte la première lame (7) et fait tourner cette dernière en transmettant le mouvement dérivé de la troisième poulie (50).

11. Scie selon la revendication 3, **caractérisée en ce que** le second moyen de transmission (16) comprend une quatrième courroie sans fin (55) entraînée autour de trois cinquièmes poulies (56a, 56b, 56c), dont l'une (56a) est clavetée d'une manière coaxiale sur une poulie (57a) faisant partie d'une paire de sixième poulies (57a, 57b), l'autre sixième poulie (57b) étant clavetée d'une manière coaxiale sur l'arbre de la seconde lame, inciseuse (15), une (56b) des cinquièmes poulies (56a, 56b, 56c) étant clavetée sur le chariot (8) dans une position telle qu'elle vient, par l'intermédiaire d'une septième poulie (58) coaxiale à la cinquième poulie (56b) et clavetée sur cette dernière, au contact d'un brin supérieur (20a) de la second courroie (20) faisant partie du second moyen d'entraînement (12) afin de faire également tourner la seconde lame, inciseuse (15).

12. Scie selon les revendications 3 et 6, **caractérisée en ce que** le premier moyen de transmission (13) est monté sur la première moitié (46) de la partie mobile (8b) du chariot (8) et le second moyen de transmission (16) est monté à la fois sur la première moitié (46) et sur la seconde moitié (47) de la partie mobile (8b) du chariot (8).

13. Scie selon la revendication 12, **caractérisée en ce que** la seconde moitié (47) est munie d'un élément de tension (59) conçu pour régler le premier moyen de transmission (16) par rapport au premier moyen de transmission (13) en fonction de la position en hauteur des deux moitiés (46, 47).
